# FASCICULE DE BREVET EUROPEEN

(11) **EP 1 960 827 B1**
(45) Date de publication et mention de la délivrance du brevet: **11.06.2014**
(21) Numéro de dépôt: 06842079.3
(22) Date de dépôt: 01.12.2006
(51) Int. Cl.: G02C 9/00, G02B 27/01

(54) **AFFICHEUR OPHTALMIQUE**
AUGENOPTISCHES DISPLAY
OPHTHALMIC DISPLAY

(30) Priorité: 13.12.2005 FR 0553846
(43) Date de publication de la demande: 27.08.2008
(73) Titulaire: ESSILOR INTERNATIONAL (Compagnie Générale d'Optique), 94227 Charenton le Pont (FR)
(72) Inventeur: ROUSSEAU, Benjamin, F-94227 Charenton-le-pont (FR)
(74) Mandataire: Lenne, Laurence
(86) Numéro de dépôt international: PCT/FR2006/051268
(87) Numéro de publication internationale: WO 2007/068838

(56) Documents cités:
- WO-A-2004/083941
- US-A- 6 092 896
- US-A- 6 139 141
- US-A1- 2002 089 639
- US-A1- 2004 240 072

## Description

La présente invention concerne un afficheur ophtalmique comportant un imageur optique destiné à permettre la projection d'informations, de type images ou multimédia et de préférence associé à une lentille. Est ici appelée « lentille » un système optique qui peut notamment être positionné dans une monture de lunettes.

Il est connu du brevet US 5 886 822 de réaliser une lentille ophtalmique présentant un insert de projection. Un tel insert de projection est constitué d'un imageur optique destiné à mettre en forme les faisceaux optiques issus d'un système électronique et optique de génération de faisceaux lumineux à partir d'un signal électronique, de type écran miniature, diode laser, diode électroluminescente. L'imageur optique dirige les faisceaux optiques vers l'oeil du porteur pour permettre la visualisation du contenu informationnel.

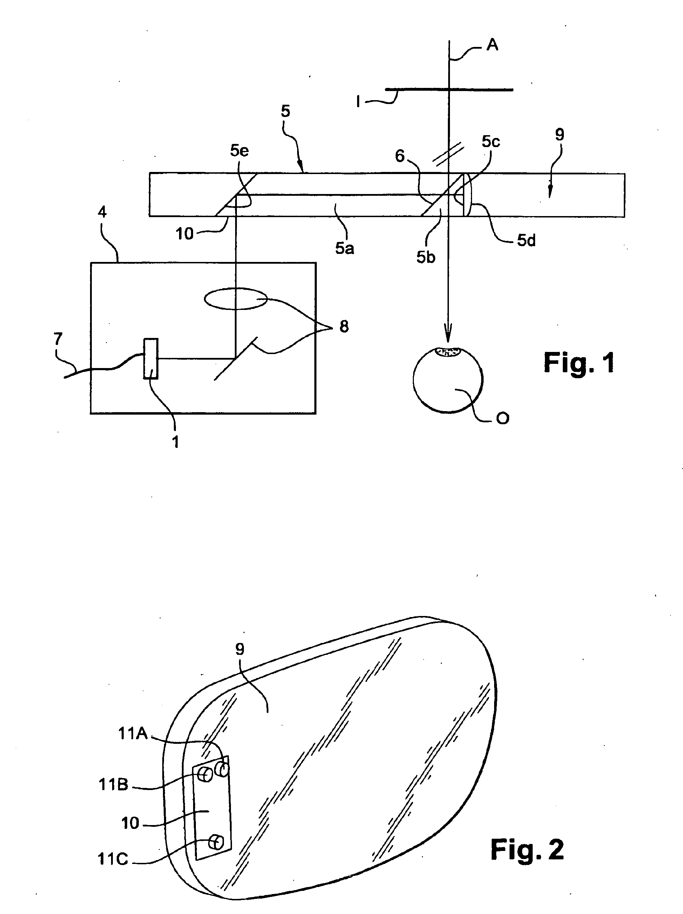

Un exemple d'afficheur connu est représenté schématiquement plus précisément sur la figure 1.

A titre d'exemple, l'imageur optique est du même type que celui décrit dans le brevet US 5 886 822 déjà mentionné.

Un signal électronique porteur d'une information est amené à un écran miniature 1 par un câble 7. A partir de ce signal, l'écran miniature 1, éclairé par un projecteur de fond, génère une image pixellisée correspondant à l'information. A titre d'exemple, il peut être utilisé un écran « KOPIN Cyberdisplay 320 color » générant des images de 320 x 240 pixels et d'une dimension de 4,8 mm x 3,6 mm. L'écran 1 est référencé au moyen d'une interface mécanique par rapport à l'imageur optique 5. Un boîtier de protection protège tout ou partie de l'ensemble. Des composants optiques 8, ici un miroir et une lentille, sont associés à l'écran 1.

Cet imageur optique 5 se compose ici d'un prisme de propagation 5a, d'un contre-prisme 5b, d'une lame quart d'onde 5c et d'un miroir de Mangin sphérique 5d. Le miroir de Mangin sphérique est une lentille plan-sphérique pour laquelle la face sphérique a été rendue réfléchissante au moyen d'un traitement aluminisé ou équivalent.

L'imageur 5 comporte également un traitement séparateur de polarisation 6 qui peut être réalisé sous forme d'un dépôt de couches minces, soit sur le prisme de propagation 5a, soit sur le contre-prisme 5b, soit au moyen d'un film collé entre les deux éléments précédemment cités.

L'imageur 5 est ici surmoulé dans une lentille 9 et le boîtier est disposé frontalement à l'arrière de la lentille, un traitement 5e réfléchissant étant alors inclus dans la lentille. Sur le même principe, le boîtier peut être disposé latéralement à cette lentille 9, l'élément réfléchissant 5e étant alors absent.

Le mot «lentille» concerne en particulier un verre, correcteur ou non, destiné à être monté dans une monture de lunettes. Ce verre de lunette ophtalmique présente des fonctionnalités traditionnelles que sont la correction de la vue, l'anti-reflet, l'anti-salissure, l'anti-rayure, par exemple.

Il est connu de fixer le système de génération de faisceaux lumineux sur la lentille et également de permettre un réglage de la focalisation permettant d'ajuster la distance de visualisation de l'image informative et de la régler en conséquence afin de procurer au porteur une vision nette et confortable par l'agencement suivant. La lentille est solidaire d'un adaptateur constitué d'une platine portant deux tiges sur lesquelles est emboîté et peut glisser le boîtier du système de génération de faisceaux lumineux. Lors de ce réglage, le boîtier est plus ou moins emboîté manuellement sur les glissières pour régler la distance et ensuite bloqué par une vis transversale.

Ce type de dispositif de liaison et de réglage de la focalisation pose les problèmes techniques suivants.

Selon l'emboîtement, l'encombrement hors tout de l'afficheur varie. Ceci peut entraîner une contrainte dans sa réalisation.

Ce type de dispositif entraîne inévitablement beaucoup de jeu entre tiges et glissières, ce qui est préjudiciable à la précision de l'afficheur.

Le boîtier est en général en matière plastique et la platine avec ses tiges en métal. Il en résulte une usure rapide du boîtier augmentant encore le jeu et l'imprécision de l'afficheur.

Enfin, le réglage est effectué selon cet art antérieur manuellement, dans le sens où le porteur doit saisir le boîtier et le faire glisser sur les tiges jusqu'à obtention de la bonne focalisation. Il va de soi, qu'un tel agencement n'est pas très précis et d'utilisation très peu confortable, peu adapté à un usage courant non expérimental.

Il peut en conséquence être envisagé de réaliser un afficheur équipé d'un dispositif de réglage de la focalisation par réglage de la longueur des faisceaux optiques entre les éléments optiques et l'imageur, dont ledit dispositif de réglage est inclus dans le système de génération de faisceaux lumineux, ce système de génération de faisceaux lumineux comprenant par exemple une platine fixe, à laquelle est relié au moins un des éléments optiques par une connexion mobile réglable grâce un dispositif d'actionnement.

En conséquence, la liaison du système de génération de faisceaux lumineux sur la lentille n'a plus besoin de permettre un réglage de distance, mais doit être peu visible sur la lentille dans un souci d'esthétique tout en permettant un positionnement et un maintien précis ainsi qu'une mise en place facile.

Il est à noter que le document de brevet US 2004/240072 décrit un afficheur comprenant un agencement optique destiné à mettre en forme des faisceaux optiques émis d'un écran miniature d'un système de génération de faisceaux lumineux introduits dans l'agencement optique par une entrée et à les diriger vers l'oeil du porteur pour permettre la visualisation d'une image.

Un verre de lunette porte un agencement d'aimant destiné à coopérer par effet magnétique et par emboîtement avec un élément magnétique porté par l'agencement optique.

Les documents de brevet US 2002/089639, WO 2004/083941, US 6 139 141 et US 6 092 896 décrivent également des afficheurs ou des dispositifs de connexion sur une paire de lunettes.

Pour ce faire, l'invention propose un afficheur ophtalmique comprenant :
- un système de génération de faisceaux lumineux,
- un imageur optique destiné à mettre en forme des faisceaux optiques émis d'un écran miniature du dit système de génération de faisceaux lumineux introduits dans ledit imageur par une face d'entrée dudit imageur et à les diriger vers l'oeil du porteur pour permettre la visualisation d'une image,
- un adaptateur référencé par rapport au dit imageur et comprenant un aimant destiné à coopérer par effet magnétique et par emboîtement, cet aimant d'un premier type étant cylindrique et présentant une extrémité d'un pôle déterminé,
- un agencement de liaison amovible au dit adaptateur,
caractérisé en ce que ledit agencement de liaison est porté par ledit système de génération de faisceaux lumineux, en ce que ledit adaptateur est constitué d'au moins deux dits aimants d'un premier type destinés à coopérer par effet magnétique et par emboîtement avec au moins deux aimants portés par ledit agencement de liaison et en ce que ces aimants d'un second type destinés à coopérer avec lesdits aimants de premier type comportent une paroi tubulaire de polarité identique à celle de ladite extrémité des aimants de premier type et présentent à une de leurs extrémités une ouverture et à leur autre extrémité un fond fermé de polarité différente de celle de ladite extrémité des aimants de premier type, chaque aimant de second type étant destiné à recevoir par emboîtement dans ladite ouverture ladite extrémité d'un aimant de premier type.

L'avantage de ce type de solution réside dans sa bonne adaptation à l'accrochage d'un système de génération de faisceaux lumineux sur une lentille ou verre de lunettes informatives ayant de fortes contraintes mécaniques, optiques, d'encombrement, de poids et d'esthétisme.

Le nombre de pièces utilisées est minimisé. L'utilisation se fait sans actionneur ni outil extérieur, avec rapidité et facilité de maniement. L'absence de pièces en frottement assure la conservation de la précision du positionnement. Esthétiquement, les pièces résiduelles sur le verre de lunette informatif, à savoir les deux aimants, sont très discrètes. L'encombrement général du système de liaison est minime, tant dans le système de génération de faisceaux lumineux que sur la lentille.

La contribution au poids total est minime sachant que les pièces dédiées uniquement à l'accrochage sont les aimants.

Avantageusement, ledit imageur est intégré à une lentille.

Et lesdits aimants de premier type de l'adaptateur peuvent être collés à la surface de ladite lentille ou intégrés partiellement dans ladite lentille.

L'invention est décrite ci-après plus en détail à l'aide de figures ne représentant qu'un mode de réalisation préféré de l'invention.
La figure 1, vue schématique de dessus d'un afficheur connu, a déjà été précisée plus haut.
La figure 2 est une vue partielle en perspective d'un afficheur ophtalmique conforme à l'invention.
La figure 3 est une vue en perspective d'un afficheur ophtalmique conforme à l'invention.
Les figures 4 et 5 sont des vues schématiques d'un afficheur ophtalmique conforme à l'invention.
Les figures 6 et 7 sont des vues en coupe de détail d'un afficheur ophtalmique conforme à l'invention.

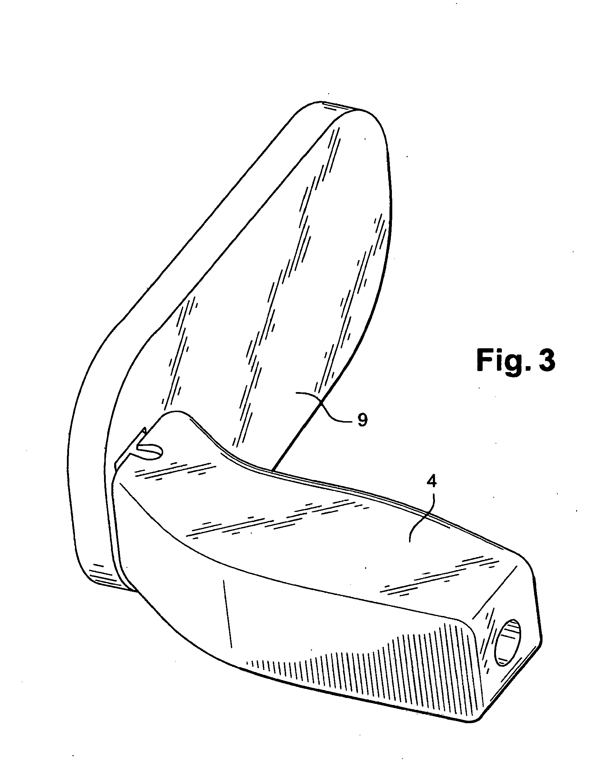

Les figures 2 et 3 représentent une lentille 9 constituée d'un verre, correcteur ou non, destiné à être monté dans une monture de lunettes. Telle que représentée sur la figure 1, dans cette lentille 9 est inséré un imageur optique 5 dont seule la face d'entrée 10 des faisceaux optiques est visible sur la figure 2.

Un adaptateur est référencé par rapport à l'imageur c'est-à-dire est solidaire de l'imageur ou de la lentille de façon précise afin d'assurer une transmission correcte et optimale des faisceaux optiques dans l'imageur et leur propagation vers l'oeil O du porteur pour permettre la visualisation d'une image I.

Ces faisceaux optiques sont émis d'un écran miniature d'un système de génération de faisceaux lumineux 4 de faisceaux optiques qui est illustré sur la figure 3 et comporte un agencement de liaison à l'adaptateur, la liaison entre le système de génération et l'adaptateur étant amovible.

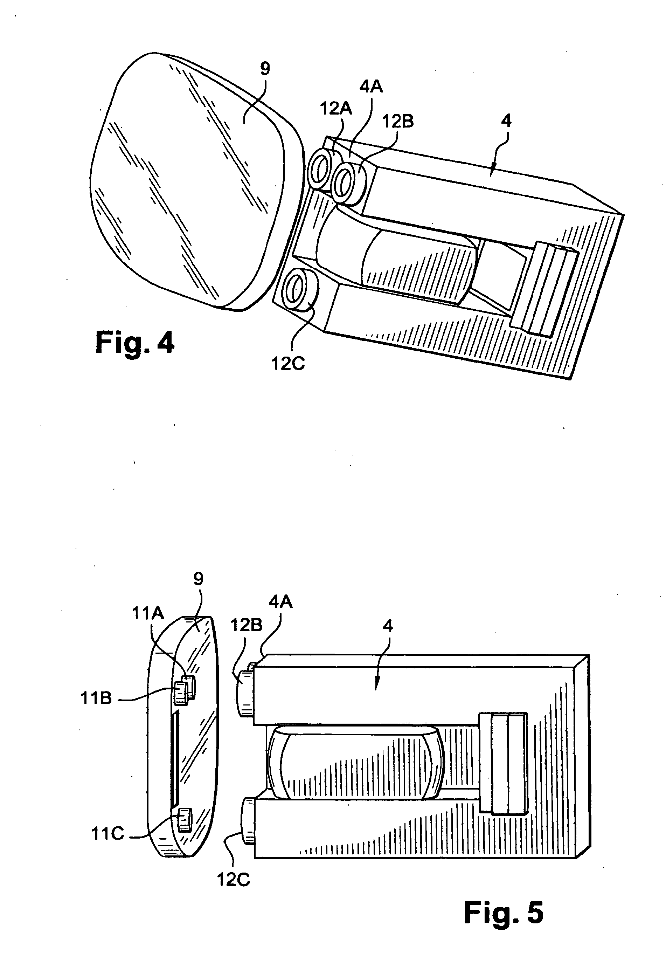

Comme visible sur les figures 4 et 5, l'adaptateur est constitué d'au moins deux aimants, ici au nombre de trois 11 A, 11 B, 11C, destinés à coopérer par effet magnétique et par emboîtement avec au moins deux aimants, ici également au nombre de trois 12A, 12B, 12C, portés par l'agencement de liaison porté par le système de génération 4.

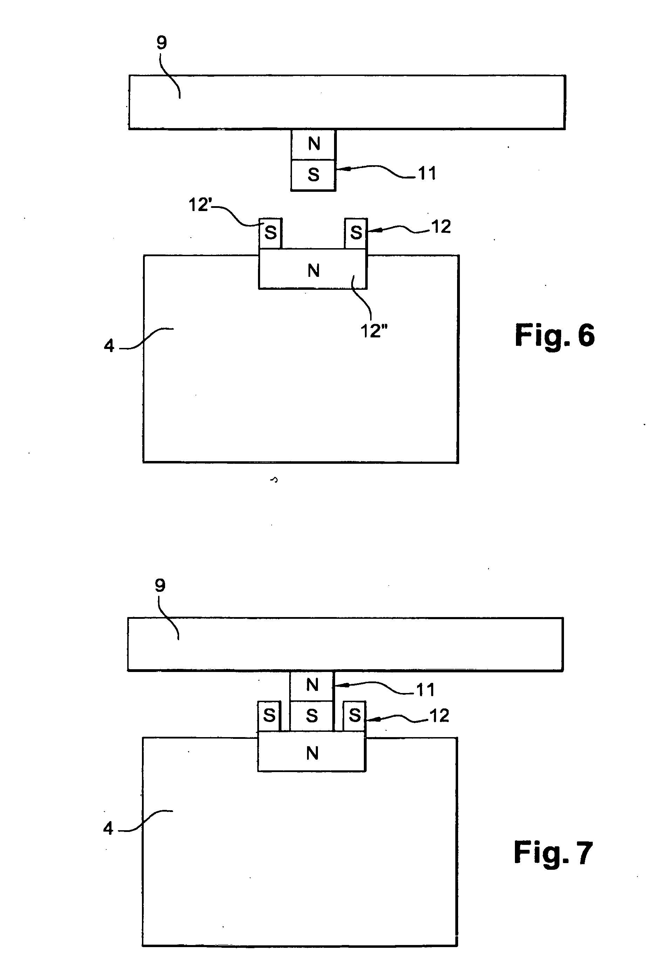

Selon le mode de réalisation représenté, l'adaptateur est constitué d'aimants de premier type 11 et l'agencement de liaison d'aimants de second type 12. Ces aimants sont également illustrés sur les figures 6 et 7.

Chaque aimant du premier type 11 est cylindrique et présente une extrémité d'un pôle déterminé, qui est le sud selon l'exemple représenté.

Chaque aimant d'un second type 12 comporte une paroi tubulaire 12' et présente à une de ses extrémités une ouverture et à son autre extrémité un fond fermé 12". Chaque aimant de second type 12 est destiné à recevoir par emboîtement dans son ouverture l'extrémité d'un aimant de premier type 11 correspondant, comme illustré sur la figure 7.

Le fond 12" d'un aimant de second type est de polarité différente de celle de l'extrémité de l'aimant de premier type 11, à savoir le nord selon l'exemple représenté. La paroi tubulaire 12' d'un aimant de second type est, par contre, de polarité identique à celle de l'extrémité d'un aimant de premier type correspondant. La paroi 12' présente donc une polarité sud et le fond 12" une polarité nord selon l'exemple illustré.

Ces aimants de premier type sont usinés. Ceux de second type peuvent également être usinés ou être réalisés par collage d'un disque constituant le fond 12" sur un tube.

De préférence, ils sont en Samarium-Cobalt 5, en Samarium-Cobalt 17 ou en Néodyne-Fer-Bore. Leur diamètre peut être de l'ordre de 1 à 5 millimètres.

Grâce à cet agencement d'aimants emboîtés, il est obtenu avec des pièces simples et en nombre très réduit, tout à la fois la fonction de maintien et la fonction de centrage.

En effet, de par la polarité opposée de l'extrémité d'emboîtement de l'aimant de premier type et du fond 12" de l'aimant de second type, ces deux parties s'attirent et assurent le maintien des deux parties en position et donc du système de génération 4 sur la lentille 9.

De par la polarité identique de l'extrémité d'emboîtement de l'aimant de premier type et de la paroi 12' de l'aimant de second type, ces deux parties se repoussent et assurent l'auto-centrage de l'aimant de premier type dans l'aimant de second type.

Dans le mode de réalisation qui a été décrit, l'adaptateur porté par la lentille est constitué d'aimants de premier type 11 et l'agencement de liaison porté par le système de génération 4 d'aimants de second type 12. Toujours dans le cadre de l'invention, l'agencement peut être inversé, c'est-à-dire l'adaptateur être constitué d'aimants de second type 12 et l'agencement de liaison d'aimants de premier type 11. Il peut même être envisagé d'équiper l'adaptateur d'aimants de premier type et d'aimants de second type et le système de génération d'aimants coopérants en correspondance à ces aimants.

Selon l'exemple réprésenté, les aimants sont de section transversale circulaire. Ils peuvent être de section transversale différente, par exemple carrée.

Selon l'exemple représenté, l'imageur est intégré à une lentille 9 de paire de lunettes. Les aimants de l'adaptateur portés par celle-ci peuvent être collés à la surface de la lentille ou intégrés partiellement dans la lentille, une partie de l'aimant étant alors ancrée dans la lentille.

## Revendications

1. Afficheur ophtalmique comprenant :
- un système de génération (4) de faisceaux lumineux,
- un imageur optique (5) destiné à mettre en forme des faisceaux optiques émis d'un écran miniature (7) du dit système de génération (4) de faisceaux lumineux introduits dans ledit imageur par une face d'entrée dudit imageur et à les diriger vers l'oeil (O) du porteur pour permettre la visualisation d'une image (I),
- un adaptateur référencé par rapport au dit imageur et comprenant un aimant (11A, 11 B, 11C) destiné à coopérer par effet magnétique et par emboîtement, cet aimant d'un premier type (11) étant cylindrique et présentant une extrémité d'un pôle déterminé,
- un agencement de liaison (4A) amovible au dit adaptateur,
**caractérisé en ce que** ledit agencement de liaison (4A) est porté par ledit système de génération de faisceaux lumineux, **en ce que** ledit adaptateur est constitué d'au moins deux dits aimants (11 A, 11 B, 11 C) d'un premier type destinés à coopérer par effet magnétique et par emboîtement avec au moins deux aimants (12A, 12B, 12C) portés par ledit agencement de liaison (4A) et **en ce que** ces aimants d'un second type (12) destinés à coopérer avec lesdits aimants de premier type comportent une paroi tubulaire (12') de polarité identique à celle de ladite extrémité des aimants de premier type (11) et présentent à une de leurs extrémités une ouverture et à leur autre extrémité un fond fermé (12") de polarité différente de celle de ladite extrémité des aimants de premier type (11), chaque aimant de second type (12) étant destiné à recevoir par emboîtement dans ladite ouverture ladite extrémité d'un aimant de premier type (11).

2. Afficheur selon la revendication précédente, **caractérisé en ce que** ledit imageur (5) est intégré à une lentille (9).

3. Afficheur selon la revendication précédente, **caractérisé en ce que** lesdits aimants (11A, 11B, 11C) de l'adaptateur sont collés à la surface de ladite lentille.

4. Afficheur selon la revendication 3, **caractérisé en ce que** lesdits aimants (12A, 12B, 12C) de l'adaptateur sont intégrés partiellement dans ladite lentille.

## Patentansprüche

1. Ophthalmologische Anzeige, umfassend:
- ein System zur Erzeugung (4) von Lichtstrahlen,
- einen optischen Bildgeber (5), der dazu ausgelegt ist, optische Strahlen in Form zu bringen, die von einem Miniaturbildschirm (7) des Systems zur Erzeugung (4) von Lichtstrahlen ausgegeben werden, eingeführt in den Bildgeber durch eine Eingabeseite des Bildgebers, und sie an das Auge (O) des Trägers zu richten, um die Visualisierung eines Bildes (I) zu ermöglichen,
- einen Adapter, der mit Bezug auf den Bildgeber angegeben ist und einen Magneten (11A, 11B, 11C) umfasst, der dazu ausgelegt ist, durch magnetischen Effekt und durch Ineinandergreifen zusammenwirken, wobei dieser Magnet einer ersten Art (11) zylindrisch ist und ein Ende eines bestimmten Pols aufweist,
- eine vom Adapter abnehmbare Verbindungsanordnung (4A),
**dadurch gekennzeichnet, dass** die Verbindungsanordnung (4A) von dem System zur Erzeugung von Lichtstrahlen getragen wird, dass der Adapter aus mindestens zwei der Magneten (11A, 11B, 11C) einer ersten Art besteht, die dazu ausgelegt sind, durch magnetischen Effekt und durch Ineinandergreifen mit mindestens zwei Magneten (12A, 12B, 12C), die von der Verbindungsanordnung (4A) getragen werden, zusammenzuwirken, und dass diese Magneten einer zweiten Art (12), die dazu ausgelegt sind, mit den Magneten der ersten Art zusammenzuwirken, eine rohrförmige Wand (12') mit identischer Polarität wie diejenige des Endes der Magneten der ersten Art (11) umfassen und an einem ihrer Enden eine Öffnung aufweisen und an ihrem anderen Ende einen geschlossenen Boden (12") mit verschiedener Polarität als derjenigen des Endes der Magneten der ersten Art (11), wobei jeder Magnet der zweiten Art (12) dazu ausgelegt ist, durch Ineinandergreifen in der Öffnung das Ende eines Magneten der ersten Art (11) aufzunehmen.

2. Anzeige nach dem vorhergehenden Anspruch, **dadurch gekennzeichnet, dass** der Bildgeber (5) in eine Linse (9) integriert ist.

3. Anzeige nach dem vorhergehenden Anspruch, **dadurch gekennzeichnet, dass** die Magneten (11A, 11B, 11C) des Adapters auf der Oberfläche der Linse haften.

4. Anzeige nach Anspruch 3, **dadurch gekennzeichnet, dass** die Magneten (12A, 12B, 12C) des Adapters teilweise in die Linse integriert sind.

## Claims

1. An ophthalmic display comprising:
- a system (4) for generating light beams,
- an optical imaging device (5) intended to shape optical beams emitted from a miniature screen (7) of said system (4) for generating light beams introduced into said imaging device through an inlet face of said imaging device and to direct them towards the eye (O) of the wearer in order to allow viewing of an image (I),
- an adapter referenced relatively to said imaging device and comprising a magnet (11A, 11B, 11C) intended to cooperate by a magnetic effect and by fitting, this magnet, of a first type (11), being cylindrical and having an end of a determined pole,
- a removable layout (4A) for connection to said adapter,
**characterized in that** said connection layout (4A) is borne by said system for generating light beams, **in that** said adapter consists of at least two of said magnets (11A, 11B, 11C) of a first type, intended to cooperate by a magnetic effect and by fitting with at least two magnets (12A, 12B, 12C) borne by said connection layout (4A) and **in that** these magnets of a second type (12) intended to cooperate with said magnets of the first type include a tubular wall (12') with a polarity identical with the one of said end of the magnets of the first type (11) and have at one of their ends an aperture and at their other end a closed bottom (12") with a polarity different from that of said end of the magnets of the first type (11), each magnet of the second type (12) being intended to receive, by fitting into said aperture, said end of a magnet of the first type (11).

2. The display according to the preceding claim, **characterized in that** said imaging device (5) is integrated to a lens (9).

3. The display according to the preceding claim, **characterized in that** said magnets (11A, 11B, 11C) of the adapter are adhesively bonded to the surface of said lens.

4. The display according to claim 3, **characterized in that** said magnets (12A, 12B, 12C) of the adapter are partly integrated into said lens.
